# EUROPEAN PATENT APPLICATION

(11) **EP 0 714 933 A1**
(43) Date of publication of application: **05.06.1996**
(21) Application number: 95117651.0
(22) Date of filing: 09.11.1995
(51) Int. Cl.: C08K 5/54, C08L 69/00

(54) **Thermally stable polycarbonate/polyester molding compositions**

(30) Priority: 22.11.1994 US 343406
(71) Applicant: Bayer Corporation, Pittsburgh, PA 15219-2502 (US)
(72) Inventor: Mason, James P., McKees Rocks, PA 15136 (US); Lundy, Charles E., Pittsburgh, PA 15243 (US)
(74) Representative: Klimiuk-Japadita, Meike

(57) **Abstract**

A thermoplastic molding composition which contains a polycarbonate resin, a polyester, and a siloxane is disclosed. The incorporation of siloxane having a formula

Rₘ -Si- Xₙ

where X is an alkyl or aryl radical, R is OCHR₃CH₂OR₄ and R₃ denotes a hydrogen atom or an alkyl radical and R₄ is an alkyl radical, and where m is 1-4 and n is 0-3, was found to impart to the composition an improved degree of thermal stability.

## Description

### Field of the Invention:

The invention concerns thermoplastic molding compositions and more specifically thermally stable compositions containing polycarbonate, polyester and a siloxane compound.

### Summary of the Invention:

A thermoplastic molding composition which contains a polycarbonate resin, a polyester, and a siloxane is disclosed. The incorporation of siloxane having a formula

Rₘ -Si- Xₙ

where X is an alkyl or aryl radical, R is OCHR₃CH₂OR₄ and R₃ denotes a hydrogen atom or an alkyl radical and R₄ is an alkyl radical, and where m is 1-4 and n is 0-3, was found to impart to the composition an improved degree of thermal stability.

### BACKGROUND OF THE INVENTION

Thermoplastic molding compositions containing polycarbonate and a polyester derived from cyclohexanedimethanol and terephthalic acid have been disclosed in U.S. Patent 5,194,523. Also relevant in this connection is U.S. Patent 5,254,610 which disclosed a composition having improved thermal stability containing a polyester, polycarbonate and a combination of aliphatic and aromatic phosphite compounds.

Polycarbonate molding compositions which contain additive amounts of organosiloxane compounds are known: the abstract of JP 5262960 is noted to have disclosed a low viscosity polycarbonate resin composition which contains organo siloxane and a catalyst. The composition is said to exhibit lower melt viscosity and improved fluidity and moldability without loss of mechanical properties. Also relevant in this connection is the abstract of JP 5086278 which disclosed an organosiloxane compound and a catalyst as additives to a polycarbonate resin. EP 505,869 disclosed a polycarbonate composition containing a siloxane compound as an additive, optionally along with oxetanes and/or epoxides, characterized in having a high dimensional stability. Polycarbonate compositions containing a cyclosiloxane compound have been disclosed in U.S. Patent 3,751,519 to have good release properties. A thermal oxidative stabilized polycarbonate composition containing a hydrocarbonoxy siloxane compound has been disclosed in U.S. Patent 4,197,384.

### DETAILED DESCRIPTION OF THE INVENTION

The thermoplastic molding compositions in accordance with the invention contain
(i) about 1 to 99, preferably 50 to 90, most preferably 60 to 80 percent of a polycarbonate resin,
(ii) about 1 to 99, preferably 50 to 10, most preferably 20 to 40 percent of a copolyester of cyclohexane dimethanol/ethylene glycol and phthalic acid, and
(iii) about 0.01 to 10, preferably 0.02 to 1.0, most preferably 0.02 to 0.7 parts per one hundred parts of resin (phr) of a siloxane compound.

The compositions of the invention have a lower yellowness index than the corresponding compositions which contain no siloxane.

The preferred compositions of the invention are transparent and have a total light transmission value (TLT as measured in accordance with ASTM D1003) of greater than 84%.

Aromatic polycarbonates within the scope of the present invention are homopolycarbonates and copolycarbonates and mixtures thereof. The polycarbonates generally have a weight average molecular weight of 10,000-200,000, preferably 20,000-80,000 and their melt flow rate, per ASTM D-1238 at 300°C, is about 1 to about 65 g/10 min., preferably about 2-15 g/10 min. They may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph H. Schnell, "Chemistry and Physics of Polycarbonates", Interscience Publishers, New York, New York, 1964, all incorporated herein by reference). In the present context, dihydroxy compounds suitable for the preparation of the polycarbonates of the inventors conform to the structural formulae (1) or (2). 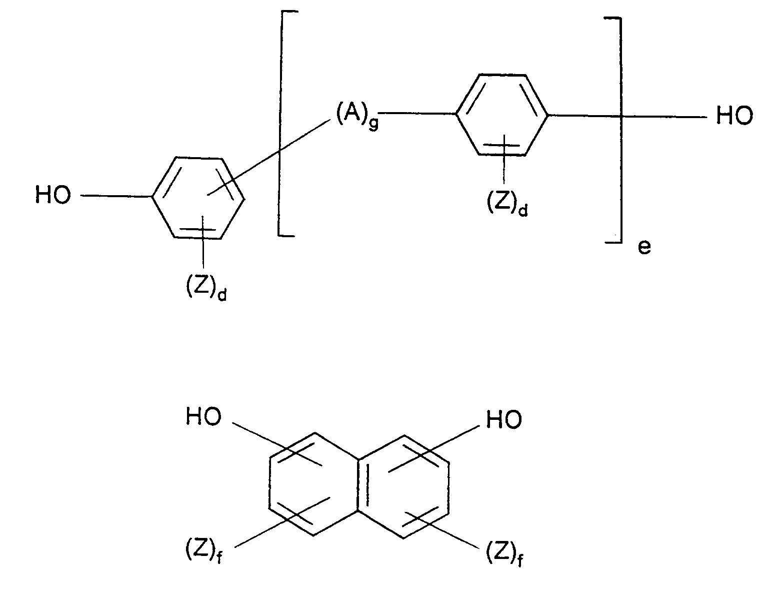
wherein
A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO- or -SO₂ or a radical conforming to 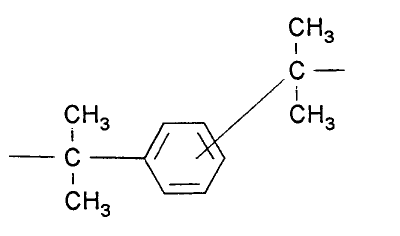
e and g both denote the number 0 to 1; Z denotes F, Cl, Br or C₁₋₄-alkyl and if several Z radicals are substituents in one aryl radical, they may be identical or different from one another; d denotes an integer of from 0 to 4; and f denotes an integer of from 0 to 3.

Among the dihydroxy compounds useful in the practice of the invention are hydroquinone, resorcinol, bis-(hydroxyphenyl)-alkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones, and α,α-bis-(hydroxyphenyl)-diisopropylbenzenes, as well as their nuclear-alkylated compounds. These and further suitable aromatic dihydroxy compounds are described, for example, in U.S. Patents 3,028,356; 2,999,835; 3,148,172; 2,991,273; 3,271,367; and 2,999,846, all incorporated herein by reference. Further examples of suitable bisphenols are 2,2-bis-(4-hydroxyphenyl)-propane (bisphenol A), 2,4-bis-(4-hydroxyphenyl)-2-methyl-butane, 1,1-bis-(4-hydroxyphenyl)-cyclohexane, α,α'-bis-(4-hydroxyphenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxyphenyl)-sulfoxide, bis-(3,5-dimethyl-4-hydroxyphenyl)sulfone, dihydroxybenzophenone, 2,4-bis-(3,5-dimethyl-4-hydroxyphenyl)-cyclohexane, α,α'-bis-(3,5-dimethyl-4-hydroxyphenyl)-p-diisopropylbenzene and 4,4'-sulfonyl diphenol.

Examples of particularly preferred aromatic bisphenols are 2,2,-bis-(4-hydroxyphenyl)-propane, 2,2-bis-(3,5-dimethyl-4-hydroxyphenyl)-propane and 1,1-bis-(4-hydroxyphenyl)-cyclohexane. The most preferred bisphenol is 2,2-bis-(4-hydroxyphenyl)-propane (bisphenol A).

The polycarbonates of the invention may entail in their structure units derived from one or more of the suitable bisphenols. Among the resins suitable in the practice of the invention are included phenol-phthalein-based polycarbonate, copolycarbonates and terpolycarbonates such as are described in U.S. Patents 3,036,036 and 4,210,741, both incorporated by reference herein. The polycarbonates of the invention may also be branched by condensing therein small quantities, e.g., 0.05-2.0 mol % (relative to the bisphenols) of polyhydroxyl compounds. Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxyphenyl)-heptane; 1,3,5-tri-(4-hydroxphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methylphenol; 2,4-dihydroxybenzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxybenzoic acid, trimesic acid, cyanuric chloride and 3,3-bis-(4-hydroxyphenyl)2-oxo-2,3-dihydroindole.

In addition to the polycondensation process mentioned above, other processes for the preparation of the polycarbonates of the invention are polycondensation in a homogeneous phase and transesterification. The suitable processes are disclosed in the incorporated herein by references, U.S. Patents 3,028,365; 2,999,846; 3,153,008; and 2,991,273. The preferred process for the preparation of polycarbonates is the interfacial polycondensation process. Other methods of synthesis in forming the polycarbonates of the invention such as disclosed in U.S. Patent 3,912,688, incorporated herein by reference, may be used.

Suitable polycarbonate resins are available in commerce, for instance, Makrolon FCR, Makrolon 2600, Makrolon 2800 and Makrolon 3100, all of which are bisphenol based homopolycarbonate resins differing in terms of their respective molecular weights and characterized in that their melt flow indices (MFR) per ASTM D-1238 are about 16.5-24, 13-16, 7.5-13.0 and 3.5-6.5 g/10 min., respectively. These are products of Miles Inc. of Pittsburgh, Pennsylvania.

Polycarbonate resins suitable in the practice of the invention are known; the structure and methods of preparation of these resins have been disclosed, for example in U.S. Patents 3,030,331; 3,169,121; 3,395,119; 3,729,447; 4,255,556; 4,260,731; 4,369,303 and 4,714,746 all of which are incorporated by reference herein.

The polyester copolymer of the invention comprises the reaction product of a glycol portion which contains 1,4-cyclohexanedimethanol (CHDM) and ethylene glycol (EG) wherein the molar ratio of CHDM to EG is from about 1:4 to 4:1, with an acid portion comprising at least one of terephthalic acid and isophthalic acid. The polyester copolymer may be prepared by procedures well known to those skilled in this art, such as by condensation reactions substantially as shown and described in U.S. Pat. No. 2,901,466. More particularly, the acid or mixture of acids or alkyl esters of the aromatic dicarboxylic acid or acids, for example dimethylterephthalate, together with the dihydric alcohols are charged to a flask and heated to temperatures sufficient to cause condensation of the copolymer to begin, for example to 175°-225°C. Thereafter the temperature is raised to about 250° to 300°C., and a vacuum is applied and the condensation reaction is allowed to proceed until substantially complete.

The condensation reaction may be facilitated by the use of a catalyst, with the choice of catalyst being determined by the nature of the reactants. The various catalysts for use herein are very well known in the art and are too numerous to mention individually herein. Generally, however, when an alkyl ester of the dicarboxylic acid compound is employed, an ester interchange type of catalyst is preferred, such as NaH Ti(OC₄H₉)₆ in n-butanol. If a free acid is being reacted with the free glycols, a catalyst is generally not added until after the preliminary condensation has gotten under way.

The reaction is generally begun in the presence of an excess of glycols and initially involves heating to a temperature sufficient to cause a preliminary condensation followed by the evaporation of excess glycol. The entire reaction is conducted with agitation under an inert atmosphere. The temperature can then be advantageously increased with or without the immediate application of a vacuum. As the temperature is further increased, the pressure can be advantageously greatly reduced and the condensation allowed to proceed until the desired degree of polymerization is achieved. The product can be considered finished at this stage or it can be subjected to further polymerization in the solid phase in accordance with well-known techniques. Thus, the highly monomeric condensation product produced can be cooled, pulverized, and the powder heated to a temperature somewhat less than that employed during the last stage of the molten phase polymerization, thereby avoiding coagulation of the solid particles. The solid phase polymerization is conducted until the desired degree of polymerization is achieved. The solid phase polymerization, among other things, results in a higher degree of polymerization without the accompanying degradation which frequently takes place when continuing the last stage of the melt polymerization at a temperature high enough to achieve the desired degree of polymerization. The solid phase process is advantageously conducted with agitation employing an inert atmosphere at either normal atmospheric pressure or under a greatly reduced pressure.

The copolyesters for use in the subject invention generally have an internal viscosity of at least about 0.4 dl./g as measured in 60/40 phenoltetrachloroethane or other similar solvent at about 25°C. The relative amounts of the 1,4-cyclohexanedimethanol to ethylene glycol in the glycol portion may vary so long as the molar ratio of 1,4-cyclohexanedimethanol to ethylene glycol is from 1:4 to 4:1. In the preferred copolyester, the glycol portion has a predominance of 1,4-cyclohexanedimethanol over ethylene glycol, e.g. greater than 50/50 mixture and especially preferably is about 65 molar 1,4-cyclohexanedimethanol to 35 molar ethylene glycol and the acid portion is terephthalic acid. A commercially available copolyester product representative of the preferred type is KODAR PCTG sold by the Eastman Kodak Company. Another preferred copolyester for use in the invention is a copolyester as described above wherein the glycol portion has a predominance of ethylene glycol over 1,4-cyclohexane-dimethanol, for example greater than 50/50 and especially preferably is about 70 molar ethylene glycol to 30 molar 1,4-cyclohexanedimethanol and the acid portion is terephthalic acid.

The siloxane entailed in the invention conforms to

Rₘ -Si- Xₙ

where X is an alkyl or aryl radical, R is OCHR₃CH₂OR₄, (R₃ is H or an alkyl radical and R₄ is an alkyl radical, and m is 1-4 and n is 0-3.

Suitable siloxane conforming to 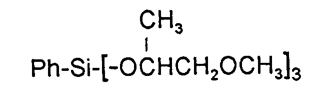
where Ph is a phenyl group, may be prepared by reacting phenyl trichlorosilane and an excess of 1-methoxy-2-propanol in tetrahydrofuran solvent with a catalytic amount of triethylamine for 6 hours at 23°C, under dry argon atmosphere.

The invention is further illustrated but is not intended to be limited by the following examples in which all parts and percentages are by weight unless otherwise specified.

### EXAMPLES

### Experimental:

Compositions in accordance with the invention have been prepared and their properties evaluated as summarized below. In the table: PC denotes a polycarbonate resin (Makrolon 3100 resin, a homopolycarbonate based on BPA, having a MFR of 4.5 g/10 min. as determined in accordance with ASTM D-1238); APEC denotes a blend of a homo-polycarbonate with a copolycarbonate based on BPA and a cyclic-bridged dihydroxy compound (APEX 9350 resin, a Miles copolymer based on 65 mol% bisphenol-A and 35 mol% of a cyclic-bridged dihydroxy compound characterized in that it has a melt flow of about 3 g/10 min; PCTG denotes a copolyester (Ektar DN001 resin, a product of Eastman characterized in that its inherent viscosity is about 0.72 to 0.8) and PETG denotes a copolyester (Kodar 6763 resin, a product of Eastman, having a number average molecular weight of about 26,000 and a glass transition temperature of about 81°C). Siloxane conforming to 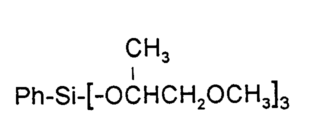
where Ph is a phenyl group, was incorporated into the composition in the amount indicated. The amounts of the resinous components shown in the table are in weight percent. The amount of siloxane additive is given in parts per one hundred resin (phr). The blends were prepared by extrusion in a twin screw extruder and 0.100" thick plaques were molded using a 3 ounce Newbury injection molding machine. The optical properties were determined using a Diano Matchscan Spectrometer.

**Table 1**

| Example | 1 | 2 | 3 | 4 | 5 |
|---|---|---|---|---|---|
| PC,w/% | 70 | 70 | 70 | | |
| APEC,w/% | | | | 80 | 80 |
| PCTG,w/% | 30 | 30 | 30 | | |
| PETG w/% | | | | 20 | 20 |
| siloxane, phr | 0.0 | 0.5 | 0.13 | 0.0 | 0.25 |
| Optical properties total light transmission, % | 83.7 | 87.4 | 87.7 | 86.8 | 88.0 |
| haze,% | 2.9 | 1.4 | 0.7 | 2.2 | 1.4 |
| yellowness index | 12.5 | 4.7 | 5.6 | 5.9 | 3.8 |

Additional compositions based on PC, PCTG and the siloxane of the examples above were prepared and their properties evaluated as summarized below. These examples are shown in the table along with the relevant results of Examples 1, 2 and 3 above:

**Table 2**

| Example | 1 | 2 | 3 | 6 | 7 |
|---|---|---|---|---|---|
| PC,w/% | 70 | 70 | 70 | 70 | 70 |
| PCTG,w/% | 30 | 30 | 30 | 30 | 30 |
| siloxane, phr | 0.0 | 0.5 | 0.13 | 0.01 | 0.2 |
| Optical properties yellowness index | 12.5 | 4.7 | 5.6 | 6.6 | 6.5 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A thermoplastic molding composition comprising a resinous blend of
(i) about 1 to 99 percent of a polycarbonate resin,
(ii) about 1 to 99 percent of a copolyester resin of cyclohexane dimethanol and ethylene glycol and at least one acid selected from terephthalic and isophthalic acid, and
about 0.01 to 10 phr of a siloxane compound conforming to
Rₘ -Si- Xₙ
where X is an alkyl or aryl radical, R is OCHR₃CH₂OR₄, R₃ is H or an alkyl radical, R₄ is an alkyl radical, m is 1-4 and n is 0-3, said percent, both occurrences, being relative to the weight of said composition.

2. The composition of Claim 1 wherein said copolyester is the reaction product of a glycol portion which contains 1,4-cyclohexane-dimethanol and ethylene glycol and wherein molar ratio of said 1,4-cyclohexanedimethanol to said ethylene glycol is about 1:4 to 4:1.

3. The composition of Claim 1 wherein said X is an aryl radical.

4. The composition of Claim 1 wherein said siloxane conforms to 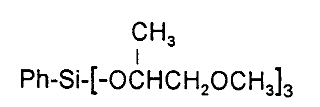 where Ph is a phenyl radical.

5. The thermoplastic molding composition of Claim 1 wherein said (i) is present in an amount of about 50 to 90 percent and said (ii) is present in an amount of about 50 to 10 percent.

6. The thermoplastic composition of Claim 5 wherein said siloxane compound is present in an amount of about 0.02 to 1.0 phr.

7. A thermoplastic molding composition comprising a resinous blend of
(i) about 50 to 90 percent of a polycarbonate resin,
(ii) about 50 to 10 percent of a copolyester resin of cyclohexane dimethanol and ethylene glycol and at least one acid selected from terephthalic and isophthalic acid, and
about 0.02 to 1.0 phr of a siloxane compound conforming to 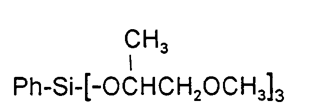 where Ph is a phenyl radical.

8. The composition of Claim 7 wherein said (i) is present in an amount of about 60 to 80 percent and said (ii) is present in an amount of about 20 to 40 percent and said siloxane compound is present in an amount of
about 0.02 to 0.7 phr.

9. The composition of Claim 8 wherein said siloxane compound conforms to 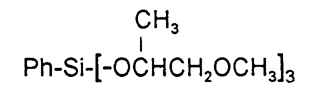 where Ph is a phenyl radical.

10. The composition of Claim 1 characterized in that it is transparent and have a total light transmission value (TLT as measured in accordance with ASTM D1003) greater than 84%.
